# FASCICULE DE BREVET EUROPEEN

(11) **EP 2 403 638 B1**
(45) Date de publication et mention de la délivrance du brevet: **10.07.2013**
(21) Numéro de dépôt: 10705370.4
(22) Date de dépôt: 25.02.2010
(51) Int. Cl.: B01J 23/00, B01J 23/10, B01J 23/34, B01J 23/83, B01J 37/03, C01G 49/00, B01J 35/00, B82Y 30/00, C01G 45/12

(54) **COMPOSITION COMPRENANT UNE PEROVSKITE A BASE DE LANTHANE SUR UN SUPPORT EN ALUMINE OU EN OXYHYDROXYDE D'ALUMINIUM, PROCEDE DE PREPARATION ET UTILISATION EN CATALYSE**
ZUSAMMENSETZUNG, ENTHALTEND EINEN LANTHAN-PEROWSKIT AUF EINEM ALUMINIUMOXID- ODER ALUMINIUMOXIDHYDROXID-SUBSTRAT, HERSTELLUNGSVERFAHREN UND VERWENDUNG BEI DER KATALYSE
COMPOSITION INCLUDING A LANTHANUM PEROVSKITE ON AN ALUMINA OR ALUMINIUM OXYHYDROXIDE SUBSTRATE, PREPARATION METHOD AND USE IN CATALYSIS

(30) Priorité: 02.03.2009 FR 0900929
(43) Date de publication de la demande: 11.01.2012
(73) Titulaire: Rhodia Opérations, 93306 Aubervilliers (FR)
(72) Inventeur: IFRAH, Simon, F-17140 Lagord (FR); LARCHER, Olivier, Pennington NJ 08534 (US); JORGE COELHO MARQUES, Rui, F-75017 Paris (FR); LALLEMAND, Michael, F-93200 Saint-denis (FR); HERNANDEZ, Julien, F-92160 Antony (FR)
(74) Mandataire: Dubruc, Philippe
(86) Numéro de dépôt international: PCT/EP2010/052381
(87) Numéro de publication internationale: WO 2010/100067

(56) Documents cités:
- FR-A- 2 756 270
- NITIN K. LABHSETWAR, A. WATANABE, R. B. BINIWALE, R. KUMAR AND T. MITSUHASHI: "Alumina supported, perovskite oxide based catalytic materials and their auto-exhaust application" APPLIED CATALYSIS B: ENVIRONMENTAL, vol. 33, no. 2, 28 septembre 2001 (2001-09-28), pages 165-173, XP002553964 doi:10.1016/S0926-3373(01)00175-8
- SYSKAKIS E ET AL: "STRUCTURAL AND HIGH TEMPERATURE ELECTRICAL PROPERTIES OF LAY- XSRXMNO3 PEROVSKITE MATERIALS" JOURNAL DE PHYSIQUE IV, EDITIONS DE PHYSIQUE. LES ULIS CEDEX, FR, vol. 3, no. 7 PART 2, 10 juin 1993 (1993-06-10), pages 1429-1434, XP008079868 ISSN: 1155-4339

## Description

La présente invention concerne une composition comprenant une pérovskite à base de lanthane sur un support en alumine ou en oxyhydroxyde d'aluminium, son procédé de préparation et son utilisation en catalyse.

Les pérovskites de formule générale ABO₃ sont connues pour présenter des propriétés intéressantes dans le domaine de la catalyse. Dans ce domaine elles sont utilisées de préférence sous forme supportée de manière à augmenter la surface de contact entre la pérovskite et le flux à traiter par exemple un gaz. Le support peut être notamment de l'alumine, de la silice ou de la cérine.

Le document FR 2756270 divulgue une composition comprenant une pérovskite du type LaMO₃, dans laquelle M est l'aluminium, le gallium ou l'indium. Ladite composition sous forme de poudre ou sous forme frittée n'est toutefois pas dispersée sur un support.

La publication: "Alumina supported, perovskite oxide based catalytic materials and their auto-exhaust application", N. K. Labhsetwar, A. Watanabe, R. B. Biniwale, R. Kumar and D. T. Mitsuhashi, Applied Catalysis B: Environmental, vol. 33, no. 2, pages 165-173, 2001, porte essentiellement sur l'étude de pérovskites de type LaMnO₃ avec de possibles substitutions. Ce document ne fournit toutefois aucune explication sur une éventuelle dispersibilité améliorée des compositions substituées du type LaMO₃.

Dans le cas d'une pérovskite supportée, il est important que la pérovskite soit dispersée le plus finement possible sur le support, c'est-à-dire qu'elle se présente sous la forme de particules fines, de dimensions nanométriques sur le support. En outre, comme les catalyseurs sont souvent exposés à des températures élevées, il convient aussi que l'état finement divisé de la pérovskite soit maintenu même à ces températures. En d'autres termes, il ne doit pas y avoir de frittage des particules de pérovskite.

Par ailleurs, on peut aussi observer à haute température l'apparition de phases cristallographiques parasites autres que la phase pure pérovskite. La formation de ces phases peut entrainer une diminution de l'activité catalytique de la pérovskite supportée. On recherche donc des produits susceptibles de conserver une pureté phasique même à températures élevées.

L'objet de l'invention est la mise au point de compositions répondant à ces conditions.

A cet effet, la composition de l'invention comprend une pérovskite de formule LaMO₃ dans laquelle M représente au moins un élément choisi parmi le fer, l'aluminium ou le manganèse, sous forme de particules dispersées sur un support à base d'alumine ou d'oxyhydroxyde d'aluminium, caractérisée en ce qu'après calcination à 700°C, 4 heures, la pérovskite se présente sous la forme d'une phase cristallographique pure et en ce que les particules de pérovskite ont une taille d'au plus 15 nm.

Les compositions de l'invention ont donc pour avantage de présenter une pérovskite qui est à la fois sous forme finement dispersée et sous forme cristallographique pure.

En outre, les compositions de l'invention peuvent présenter des propriétés de réductibilité intéressantes.

D'autres caractéristiques, détails et avantages de l'invention apparaîtront encore plus complètement à la lecture de la description et du dessin annexé dans lequel :

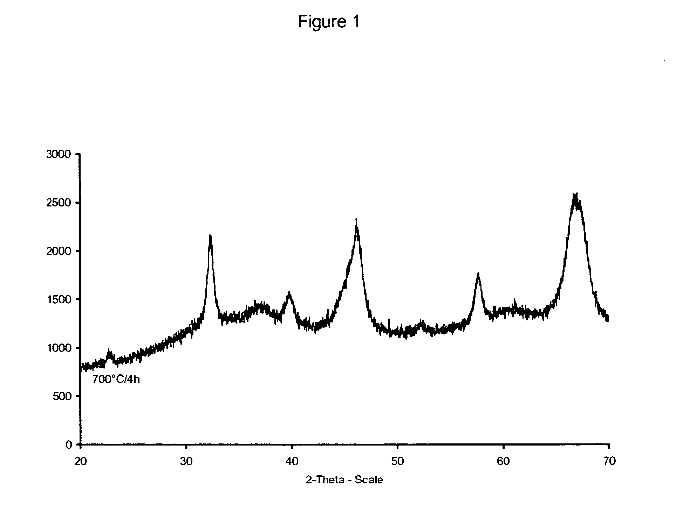

- la figure 1 est un diffractogramme DRX d'un produit selon l'invention.

Par terre rare on entend les éléments du groupe constitué par l'yttrium et les éléments de la classification périodique de numéro atomique compris inclusivement entre 57 et 71.

Pour la suite de la description, on entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

En outre, les calcinations pour une température et une durée données correspondent, sauf indication contraire, à des calcinations sous air à un palier de température sur la durée indiquée.

On précise aussi pour la suite de la description que, sauf indication contraire, dans toutes les gammes ou limites de valeurs qui sont données, les valeurs aux bornes sont incluses, les gammes ou limites de valeurs ainsi définies couvrant donc toute valeur au moins égale et supérieure à la borne inférieure et/ou au plus égale ou inférieure à la borne supérieure.

La composition de l'invention comprend donc une pérovskite supportée sous forme de particules de dimensions nanométriques, ces particules étant déposées sur un support en alumine.

La pérovskite répond à la formule LaMO₃ dans laquelle M représente au moins un élément choisi parmi le fer, l'aluminium ou le manganèse. L'invention couvre donc bien le cas où M peut représenter une combinaison de deux ou des trois éléments précités.

On sait que la stabilité structurale des pérovskites permet la substitution partielle des cations A et B par des cations de valences identiques ou différentes. L'invention couvre de ce fait les cas où au moins un des éléments La et M de la pérovskite est partiellement substitué par au moins un élément substituant.

A titre d'exemple uniquement, l'élément substituant peut être choisi parmi le calcium et les terres rares. Cette terre rare peut être plus particulièrement le cérium, l'yttrium, le praséodyme ou le néodyme.

L'élément substituant peut être choisi aussi parmi le cobalt et le strontium.

Généralement le calcium et les terres rares sont présents comme substituant de l'élément La et le cobalt et le strontium comme substituant de l'élément M mais on comprendra que cette attribution d'une classe de substituants à un élément substitué n'est donnée qu'à titre d'exemple, qu'elle n'est pas absolue et qu'il n'est pas exclu qu'un substituant donné pour un élément puisse venir en substitution d'un autre.

On peut noter que les combinaisons des éléments M qui ont été mentionnées plus haut peuvent se comprendre comme des substitutions partielles d'un premier élément M par un deuxième élément M.

La quantité d'élément substituant peut varier d'une manière connue dans une gamme comprise entre 1 % et 20% environ, plus particulièrement entre 5% et 15%, cette quantité étant exprimée par le rapport atomique élément substituant / (élément substituant + élément substitué).

La quantité de pérovskite dans la composition peut varier dans de larges limites. Cette quantité peut aller jusqu'à environ 40%, plus particulièrement environ 35%, et encore plus particulièrement environ 30% en masse de pérovskite par rapport à la masse totale de la composition.

La teneur minimale en pérovskite supportée est celle à partir de laquelle l'homme du métier sait que l'on peut obtenir une activité catalytique suffisante et elle est fixée en fonction des performances recherchées de la composition. A titre d'exemple seulement, cette quantité de pérovskite peut être d'au moins environ 1 %, plus particulièrement d'au moins 5% et encore plus particulièrement d'au moins 10% en masse. Cette quantité de pérovskite peut ainsi être comprise entre l'une quelconque des valeurs minimales données ci-dessus avec l'une quelconque des valeurs maximales données plus haut dans le paragraphe précédent. Plus précisément, cette quantité peut ainsi être comprise entre 5% et 30%, plus particulièrement entre 10% et 20% en masse. On pourra noter que pour une pérovskite supportée donnée, la taille des cristallites est généralement d'autant plus faible que la quantité de pérovskite dans la composition est faible.

De manière connue, la pérovskite peut présenter un déficit ou une lacune en un des éléments La ou M. Ce déficit peut augmenter l'activité catalytique de la pérovskite. Ce déficit peut être compris dans une gamme allant de 5% à 30%, plus particulièrement de 10% à 20% par rapport à la quantité stoechiométrique de l'élément La ou Mn dans la pérovskite non lacunaire.

Selon une première caractéristique de l'invention, la pérovskite se présente sous la forme d'une phase cristallographique pure même après calcination de la composition à 700°C, 4 heures.

La pureté au sens cristallographique est mise en évidence par le diagramme de diffraction des rayons X (DRX). Le diagramme de diffraction de la composition, après calcination dans les conditions indiquées, ne fait apparaître, outre la phase cristallographique de l'alumine ou de l'oxyhydroxyde d'aluminium du support, que les seuls pics de la phase pérovskite. On ne voit pas apparaître de pics correspondant par exemple à l'oxyde La₂O₃ ou à un oxyde de l'élément M.

Comme indiqué plus haut, dans la composition de l'invention, les particules de pérovskite sont déposées ou dispersées sur le support. On entend par là que les particules de pérovskite sont majoritairement et de préférence totalement présentes sur la surface de ce support étant entendu que les particules peuvent être présentes à l'intérieur des pores du support mais en restant cependant à la surface de ces pores.

Selon une autre caractéristique de l'invention, ces particules présentent une taille qui est d'au plus 15 nm lorsque la composition a été calcinée à 700°C pendant 4 heures.

Les valeurs de taille données dans la présente description sont des tailles moyennes déterminées par la technique DRX. La valeur mesurée en DRX correspond à la taille du domaine cohérent calculé à partir de la largeur des trois raies de diffraction les plus intenses dans le groupe d'espace x, y, z et en utilisant le modèle de Debye-Scherrer.

On doit noter par ailleurs que les particules de pérovskite peuvent être soit individualisées et donc constituées d'un seul cristallite soit éventuellement sous forme d'agrégats de plusieurs cristallites formant un domaine cohérent.

Selon un mode de réalisation préféré, les particules présentent une taille d'au plus 10 nm. Dans le cas particulier des pérovskites dans lesquelles M est le manganèse ou l'aluminium, ces deux éléments pouvant être éventuellement substitués, des tailles d'au plus 5 nm peuvent être obtenues. Les valeurs de taille données ici s'entendant toujours pour une composition calcinée à 700°C pendant 4 heures.

On notera enfin que les particules peuvent présenter une taille minimale très faible, à la limite des possibilités de mesure par la technique DRX, par exemple de l'ordre de 2 à 3 nm, ceci après calcination à 700°C 4 heures.

Le support de la composition de l'invention peut être tout d'abord à base d'alumine. De préférence, ce support doit présenter une surface spécifique élevée et stable, c'est-à-dire qui reste à une valeur suffisante même après exposition à une température élevée.

On peut utiliser ici tout type d'alumine susceptible de présenter une surface spécifique suffisante pour une application en catalyse. On peut ainsi utiliser notamment une alumine présentant une surface spécifique d'au moins 80 m²/g, de préférence d'au moins 100 m²/g et comprise par exemple entre 80 m²/g et 400 m²/g.

On peut mentionner les alumines issues de la déshydratation rapide d'au moins un hydroxyde d'aluminium, tel que la bayérite, l'hydrargillite ou gibbsite, la nordstrandite, et/ou d'au moins un oxyhydroxyde d'aluminium tel que la boehmite, la pseudoboehmite et le diaspore.

Le support peut être aussi à base d'oxyhydroxyde d'aluminium du type précité et présentant aussi une surface spécifique adaptée, c'est-à-dire comme décrite plus haut au sujet de l'alumine.

Selon un mode de réalisation particulier de l'invention, on utilise une alumine ou un oxyhydroxyde d'aluminium stabilisé et/ou dopé. Comme élément stabilisant et/ou dopant on peut citer les terres rares, le titane, le zirconium et le silicium. Parmi les terres rares on peut mentionner tout particulièrement le cérium, le praséodyme, le néodyme, le lanthane ou le mélange lanthane-néodyme. Le lanthane est ici la terre rare préférée. Ces éléments peuvent être utilisés seuls ou en combinaison.

On notera pour la suite de la description que les termes « stabilisé », dopé », stabilisant » ou « dopant » doivent être interprétés d'une manière non limitative un élément dopant pouvant ainsi être compris comme stabilisant et réciproquement.

La préparation de l'alumine ou de l'oxyhydroxyde d'aluminium stabilisé et/ou dopé se fait d'une manière connue en soi, notamment par imprégnation de l'alumine ou de l'oxyhydroxyde d'aluminium par des solutions de sels, comme les nitrates, des éléments stabilisants et/ou dopants précités ou encore par coséchage d'un précurseur d'alumine ou de l'oxyhydroxyde d'aluminium et de sels de ces éléments puis calcination.

On peut citer par ailleurs une autre préparation de l'alumine stabilisée dans laquelle la poudre d'alumine issue de la déshydratation rapide d'un hydroxyde ou d'un oxyhydroxyde d'aluminium est soumise à une opération de mûrissement en présence d'un agent stabilisant constitué par un composé du lanthane et, éventuellement, un composé du néodyme, ce composé pouvant être plus particulièrement un sel. Le mûrissement peut se faire par mise en suspension de l'alumine dans l'eau puis chauffage à une température comprise par exemple entre 70 et 110°C. Après le mûrissement, l'alumine est soumise à un traitement thermique.

La teneur en stabilisant et/ou dopant exprimée en masse d'oxyde de stabilisant par rapport à l'alumine ou à l'oxyhydroxyde d'aluminium stabilisé et/ou dopé est comprise généralement entre 1% et 10% environ.

Les compositions de l'invention peuvent présenter des tailles de particules de pérovskite qui restent encore faibles même à des températures supérieures à 700°C. Ainsi, après calcination à 900°C, 4 heures, les particules de pérovskite présentent une taille d'au plus 18 nm, plus particulièrement d'au plus 15 nm. Dans ce cas, les particules peuvent présenter une taille minimale qui peut être d'environ au moins 5 nm.

Après calcination à 1000°C, 4 heures, les particules de pérovskite présentent une taille d'au plus 22 nm, plus particulièrement d'au plus 15 nm. Dans ce cas, les particules peuvent présenter une taille minimale qui peut être d'environ au moins 8 nm.

Selon des modes de réalisation préférés et, plus particulièrement avec des supports d'alumine ou d'oxyhydroxyde d'aluminium stabilisé et/ou dopé, notamment par le lanthane, il est possible d'avoir des compositions dans lesquelles la pérovskite se présente sous la forme d'une phase cristallographique pure même après calcination à 900°C ou encore à 1000°C, 4 heures.

Outre le fait que les compositions de l'invention contiennent une pérovskite finement dispersée, certaines d'entre elles présentent des propriétés de réductibilité intéressantes. Il s'agit des compositions pour lesquelles l'élément M de la pérovskite est le fer et/ou le manganèse, ces éléments pouvant être substitués et la pérovskite pouvant être lacunaire. Dans ce cas, la pérovskite supportée présente une quantité d'oxygène labile plus importante que la même pérovskite massive, par exemple au moins deux fois plus, voire cinq fois plus ce qui se traduit par une réductibilité du produit plus élevée.

Le procédé de préparation des compositions de l'invention va maintenant être décrit.

Ce procédé est caractérisé en ce qu'il comprend les étapes suivantes :
- on forme un milieu liquide comprenant de l'alumine ou de l'oxyhydroxyde d'aluminium et des sels des éléments La et M et, le cas échéant, d'un élément substituant, lesdits sels étant choisis parmi les acétates, les chlorures et les nitrates;
- on ajoute une base au milieu ainsi formé jusqu'à l'obtention d'un pH d'au moins 9 ce par quoi on obtient un précipité;
- on sépare le précipité du milieu réactionnel et, dans le cas de l'utilisation dans la première étape de chlorures ou de nitrates comme sels des éléments précités, on le lave;
- on calcine le précipité.

La première étape du procédé consiste donc à former un milieu liquide, généralement un milieu aqueux qui contient, sous forme d'une dispersion, l'alumine ou l'oxyhydroxyde d'aluminium qui va servir de support à la composition que l'on cherche à préparer.

Selon une variante préférée, l'alumine ou l'oxyhydroxyde d'aluminium peuvent avoir été préalablement calcinés, par exemple à une température pouvant être comprise entre 500°C et 700°C, afin d'éviter une variation trop importante des caractéristiques cristallographiques dans la suite du procédé de préparation.

Ce milieu liquide de départ contient en outre des sels des éléments La et M et, dans le cas de la préparation de compositions dans lesquelles les éléments La et M de la pérovskite sont substitués, les sels des éléments substituants.

Les sels sont choisis parmi les acétates, les chlorures et les nitrates. Les acétates sont utilisés de préférence si l'on cherche à obtenir les tailles de cristallites les plus faibles possible. Les chlorures peuvent présenter l'avantage de conduire plus facilement à des compositions dans lesquelles la pérovskite reste sous forme d'une phase cristallographique pure à 900°C ou 1000°C.

Dans une seconde étape du procédé de l'invention, on ajoute une base au milieu formé à l'étape précédente.

On peut utiliser comme base les produits du type hydroxyde, carbonate ou hydroxy-carbonate par exemple. On peut citer les hydroxydes d'alcalins ou d'alcalino-terreux, les amines secondaires, tertiaires ou quaternaires. Toutefois, les amines et l'ammoniaque peuvent être préférés dans la mesure où ils diminuent les risques de pollution par les cations alcalins ou alcalino terreux. On peut aussi mentionner l'urée.

L'addition de la base se fait jusqu'à l'obtention d'un pH du milieu réactionnel d'au moins 9, plus particulièrement d'au moins 9,5.

La mise en contact avec la base conduit à la formation d'un précipité en suspension dans le milieu liquide réactionnel.

L'addition de la base se fait de préférence sous agitation. L'agitation peut être maintenue après cette addition, par exemple pendant une durée d'au moins 1 heure.

A l'issue de cette seconde étape, on sépare le précipité du milieu liquide par tout moyen connu.

Le précipité ainsi obtenu peut être lavé, notamment avec de l'eau pure ou de l'eau ammoniaquée. Il faut noter que le lavage n'est pas nécessaire dans le cas de l'utilisation d'acétates comme sels de départ, par contre il s'impose dans le cas de l'utilisation de chlorures ou de nitrates, l'absence de lavage dans ce cas pouvant conduire à des compositions dans lesquelles la phase pérovskite ne serait pas pure.

La dernière étape du procédé est une étape de calcination.

Cette calcination permet de développer la cristallinité de la pérovskite supportée et elle peut être également ajustée et/ou choisie en fonction de la température d'utilisation ultérieure réservée à la composition selon l'invention, et ceci en tenant compte du fait que la surface spécifique du produit est d'autant plus faible que la température de calcination mise en oeuvre est plus élevée. Une telle calcination est généralement opérée sous air, mais une calcination menée par exemple sous gaz inerte ou sous atmosphère contrôlée (oxydante ou réductrice) n'est bien évidemment pas exclue.

En pratique, on limite généralement la température de calcination à un intervalle de valeurs comprises entre 500°C et 800°C, de préférence entre 600°C et 700°C. La durée de calcination est ajustée d'une manière connue, elle peut varier par exemple entre 30 minutes et 4 heures, cette durée étant généralement d'autant plus faible que la température est élevée.

Les compositions de l'invention telles que décrites plus haut ou telles qu'obtenues par le procédé décrit précédemment se présentent sous forme de poudres mais elles peuvent éventuellement être mises en forme pour se présenter sous forme de granulés, billes, cylindres ou nids d'abeille de dimensions variables.

Les compositions de l'invention décrites plus haut ou obtenues par le procédé décrit précédemment peuvent être utilisées comme catalyseurs. Ainsi, l'invention concerne aussi des systèmes catalytiques comprenant ces compositions. Ces systèmes comprennent un revêtement (wash coat) à propriétés catalytiques à base de ces compositions et, éventuellement, d'un liant de type connu, sur un substrat du type par exemple monolithe métallique ou en céramique. Ce revêtement est obtenu par mélange de la composition avec le liant de manière à former une suspension qui peut être ensuite déposée sur le substrat.

Ces systèmes catalytiques et plus particulièrement les compositions de l'invention peuvent trouver de très nombreuses applications. Ils sont ainsi particulièrement bien adaptés à, et donc utilisables dans la catalyse de diverses réactions telles que, par exemple, la déshydratation, l'hydrosulfuration, l'hydrodénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, en particulier pour la post combustion automobile et notamment la catalyse trois voies, la démétallation, la méthanation, la shift conversion, l'oxydation catalytique des suies émises par les moteurs à combustion interne comme les moteurs diesel ou essence fonctionnant en régime pauvre. Les systèmes catalytiques et les compositions de l'invention peuvent enfin être utilisés comme catalyseur de la réduction sélective des NOx par réaction de réduction de ces NOx par tout réducteur du type hydrocarbure ou encore par l'ammoniaque ou l'urée et, dans ce cas, en tant que catalyseur pour la réaction d'hydrolyse ou de décomposition de l'urée en ammoniaque (Procédé SCR).

Enfin, les compositions de l'invention peuvent aussi être utilisées dans des traitements de purification de l'air dans le cas d'un air contenant au moins un composé du type monoxyde de carbone, éthylène, aldéhyde, amine, mercaptan, ozone et, d'une manière générale, du type des composés organiques volatils ou des polluants atmosphériques tels que les acides gras, les hydrocarbures, en particulier les hydrocarbures aromatiques, et les oxydes d'azote (pour l'oxydation du NO en NO₂) et du type composés malodorants. On peut citer plus particulièrement comme composés de cette sorte l'éthanethiol, l'acide valérique et la triméthylamine.

Dans le cas de ces utilisations en catalyse, les compositions de l'invention peuvent être employées en combinaison avec des métaux précieux ou encore des métaux de transition sous forme oxyde, sulfure ou autre et elles jouent ainsi le rôle de support pour ces métaux. La nature de ces métaux et les techniques d'incorporation de ceux-ci dans les compositions supports sont bien connues de l'homme du métier. Par exemple, les métaux peuvent être l'or, l'argent, le platine, le rhodium, le palladium ou l'iridium, le molybdène, le tungstène, le nickel, le cobalt, le manganèse, le cuivre, le titane ou le vanadium; ils peuvent être utilisés seuls ou en combinaison et ils peuvent notamment être incorporés aux compositions par imprégnation.

Pour le traitement des gaz d'échappement les systèmes précités sont montés d'une manière connue dans les pots d'échappement des véhicules automobiles.

Des exemples vont maintenant être donnés.

### EXEMPLE COMPARATIF 1

Cet exemple comparatif concerne la préparation d'une pérovskite massique, non supportée, à base de lanthane et de fer (LaFeO₃).

Pour cela on mélange 20,32 g de nitrate de fer, 30,24 g d'une solution de nitrate de lanthane à 2,785 mol.L⁻¹ et 63,69 g d'acide citrique. On ajoute instantanément 20 ml d'eau et on mélange à température ambiante pendant 20 minutes. On chauffe jusqu'à obtenir un gel qui est mis ensuite à l'étuve 12 heures à 120°C.

Le solide obtenu est broyé puis calciné sous air à 700°C pendant 2 heures.

### EXEMPLE 1

Cet exemple concerne la préparation selon le procédé de l'invention d'une composition à base d'une pérovskite de lanthane et de fer (LaFeO₃) dispersée sur un support d'alumine dopée à 6% de lanthane dans les proportions respectives de pérovskite et de support en masse d'oxyde de 10% et 90%.

On procède au préalable à la préparation d'une solution comprenant de l'alumine dopée au lanthane et des sels d'acétate de fer et de lanthane. Pour cela, on dilue 2,26 g d'acétate de fer dans 75 ml d'eau et 4,46 g d'acétate de lanthane dans 75 ml d'eau. Ces solutions sont mélangées et le mélange ainsi obtenu présente un pH de 5,4. D'autre part, on prépare une dispersion contenant 27 g d'alumine dopée, préalablement calcinée à 700°C pendant 2 heures sous air, de surface de 180 m²/g, dispersée dans 150 ml d'eau. On ajoute la solution d'acétate de fer et de lanthane à la dispersion d'alumine afin d'obtenir un mélange liquide comprenant de l'alumine dopée au lanthane et des sels d'acétate de fer et de lanthane. On ajoute à ce mélange 11,3 g d'une solution de NH₄OH à 28% de telle sorte que le pH final atteigne 10; on observe la formation d'un précipité. Le précipité obtenu est maintenu sous agitation pendant 1 h30 à température ambiante. Ce précipité est filtré sur Büchner.

La poudre obtenue est calcinée sous air à 700°C pendant 4 heures

La figure 1 est le diffractogramme DRX réalisé à partir de la poudre ainsi obtenue. Cette figure fait apparaître une phase pérovskite pure.

### EXEMPLE 2

Cet exemple concerne la préparation selon le procédé de l'invention d'une composition à base d'une pérovskite de lanthane et de fer sous stoechiométrique en lanthane (La_{0,9}FeO₃) dispersée sur le même support d'alumine que celui de l'exemple 1 et dans les proportions respectives de pérovskite et de support en masse d'oxyde de 10% et 90%.

On dilue 2,4 g d'acétate de fer dans 75 ml d'eau et 4,25 g d'acétate de lanthane dans 75 ml d'eau. Ces solutions sont mélangées et le mélange ainsi obtenu présente un pH de 5,5. D'autre part, on prépare une dispersion contenant la même quantité de l'alumine de l'exemple 1. On ajoute la solution d'acétate de fer et de lanthane à la dispersion d'alumine. On ajoute ensuite au mélange ainsi obtenu 10 g d'hydroxyde de sodium de telle sorte que le pH final atteigne 10 et on observe la formation d'un précipité. Le précipité obtenu est maintenu sous agitation pendant 1 h30. Ce précipité est filtré sur Büchner.

La poudre obtenue est calcinée sous air à 700°C pendant 4 heures.

Le diagramme DRX réalisé à partir de la poudre ainsi obtenue fait apparaître une phase pérovskite pure.

### EXEMPLE 3

Cet exemple concerne la préparation selon le procédé de l'invention d'une composition à base d'une pérovskite de lanthane et de fer dopée au cérium et au calcium (La_{0,9}Ce_{0,05}Ca_{0,05}FeO₃), dispersée sur le même support d'alumine que celui de l'exemple 1 et dans les proportions respectives de pérovskite et de support en masse d'oxyde de 10% et 90%.

On dilue d'une part 4,09 g d'acétate de lanthane, 0,22 g d'acétate de cérium et 0,11 g d'acétate de calcium dans 75 ml d'eau et d'autre part 2,31 g d'acétate de fer dans 75 ml d'eau. Ces solutions sont mélangées pour obtenir un mélange d'acétate à pH de 5,5. D'autre part, on prépare une dispersion contenant la même quantité de l'alumine de l'exemple 1. On ajoute la solution d'acétates de fer, de cérium, de calcium et de lanthane à la dispersion d'alumine. On ajoute ensuite au mélange ainsi obtenu 14 g d'hydroxyde de sodium de telle sorte que le pH final atteigne 10 et on observe la formation d'un précipité. Le précipité obtenu est maintenu sous agitation pendant 1h30. Ce précipité est filtré sur Büchner.

La poudre obtenue est calcinée sous air à 700°C pendant 4 heures.

Le diagramme DRX réalisé à partir de la poudre ainsi obtenue fait apparaître une phase pérovskite pure.

### EXEMPLE 4

Cet exemple concerne la préparation selon le procédé de l'invention d'une composition à base d'une pérovskite de lanthane et de fer (LaFeO₃) dispersée sur un support d'alumine dans les proportions respectives de pérovskite et de support en masse d'oxyde de 10% et 90%.

On dilue 1,36 g de chlorure de fer dans 50 ml d'eau et 6,17 g de chlorure de lanthane dans 50 ml d'eau. Ces solutions sont mélangées et le mélange ainsi obtenu présente un pH de 2. D'autre part, on prépare une dispersion contenant 18 g d'alumine (obtenu à partir d'une boehmite calcinée à 700°C pendant 2 heures), dispersée dans 100 ml d'eau. On ajoute la solution de chlorure de fer et de lanthane à la dispersion d'alumine. On ajoute au mélange ainsi obtenu 9,9 g d'une solution de NH₄OH à 28% de telle sorte que le pH final atteigne 10; on observe la formation d'un précipité. Le précipité obtenu est maintenu sous agitation pendant 1 h30. Ce précipité est filtré sur Büchner et lavé 8 fois à iso-volume.

La poudre obtenue est calcinée sous air à 700°C pendant 4 heures.

Le diagramme DRX réalisé à partir de la poudre ainsi obtenue fait apparaître une phase pérovskite pure.

Le diagramme DRX réalisé à partir de cette même poudre mais calcinée à 900°C pendant 4 heures ou calcinée à 1000°C pendant 4 heures fait apparaître une phase pérovskite pure dans chacun des cas.

### EXEMPLE 5

Cet exemple concerne la préparation de la même composition que celle de l'exemple 4 mais par un procédé mettant en oeuvre des nitrates.

On dilue 3,35 g de nitrate de fer dans 50 ml d'eau et 4,98 g de nitrate de lanthane dans 50 ml d'eau. On ajoute à la même dispersion d'alumine que celle de l'exemple 4, 9,7 g d'une solution de NH₄OH à 28% de telle sorte que le pH final atteigne 10; on observe la formation d'un précipité. Le précipité obtenu est maintenu sous agitation pendant 1 h30. Ce précipité est filtré sur Büchner et lavé 7 fois à iso-volume.

La poudre obtenue est calcinée sous air à 700°C pendant 4 heures.

Le diagramme DRX réalisé à partir de la poudre ainsi obtenue fait apparaître une phase pérovskite pure.

### EXEMPLE 6

Cet exemple concerne la préparation selon le procédé de l'invention d'une composition à base d'une pérovskite de lanthane et de manganèse (LaMnO₃) dispersée sur un support d'alumine dans les proportions respectives de pérovskite et de support en masse d'oxyde de 10% et 90%.

On dilue 3,04 g d'acétate de manganèse dans 75 ml d'eau et 4,47 g d'acétate de lanthane dans 75 ml d'eau. Ces solutions sont mélangées et le mélange ainsi obtenu présente un pH de 7,2. D'autre part, on prépare une dispersion contenant 27 g d'alumine, préalablement calcinée à 700°C pendant 2 heures sous air, dispersée dans 150 ml d'eau. On ajoute le mélange d'acétate de manganèse et de lanthane à la dispersion d'alumine. On ajoute ensuite au milieu ainsi obtenu 9,5 g d'une solution de NH₄OH à 28% de telle sorte que le pH final atteigne 10; on observe la formation d'un précipité. Le précipité obtenu est maintenu sous agitation pendant 30 minutes à température ambiante. Ce précipité est filtré sur Büchner.

La poudre obtenue est calcinée sous air à 700°C pendant 4 heures.

Le diagramme DRX réalisé à partir de la poudre ainsi obtenue fait apparaître une phase pérovskite pure.

### EXEMPLE 7

Cet exemple concerne la préparation selon le procédé de l'invention d'une composition à base de la même pérovskite et du même support que ceux de l'exemple 6 mais dans les proportions respectives de pérovskite et de support en masse d'oxyde de 20% et 80%.

On dilue 6,08 g d'acétate de manganèse dans 75 ml d'eau et 8,94 g d'acétate de lanthane dans 75 ml d'eau. Ces solutions sont mélangées et le mélange ainsi obtenu présente un pH de 7,2. On ajoute ce mélange à la même dispersion d'alumine que celle de l'exemple 6. On ajoute ensuite au milieu ainsi obtenu 9,5 g d'une solution de NH₄OH à 28% de telle sorte que le pH final atteigne 10 ; on observe la formation d'un précipité. Le précipité obtenu est maintenu sous agitation pendant 60 minutes à température ambiante. Ce précipité est filtré sur Büchner.

La poudre obtenue est calcinée sous air à 700°C pendant 4 heures.

Le diagramme DRX réalisé à partir de la poudre ainsi obtenue fait apparaître une phase pérovskite pure.

On donne dans le tableau 1 ci-dessous, la taille des particules de pérovskite dans les compositions de chacun des exemples selon l'invention après calcination des compositions aux températures indiquées pendant 4 heures.

**Tableau 1**

| Exemple | Tailles des particules (nm) en fonction de la température | | |
|---|---|---|---|
| | 700°C | 900°C | 1000°C |
| 1 | 8 | 9 | 12 |
| 2 | 9 | 11 | 12 |
| 3 | 9 | 11 | 12 |
| 4 | 12 | 14 | 20 |
| 5 | 8 | 13 | 20 |
| 6 | 3 | 8 | 30 |
| 7 | 10 | 16 | 20 |

On donne dans le tableau 2 ci-dessous, les résultats des mesures de réductibilité des compositions selon les exemples comparatifs et selon l'invention.

La réductibilité est mesurée par réduction programmée en température de la manière suivante.

On utilise un appareil Micromeritics Autochem 2920 avec un réacteur en quartz et un échantillon de 200 mg de produit qui a été préalablement calciné 6 heures à 700°C sous air.

Le gaz est l'hydrogène à 10% en volume dans l'argon et avec un débit de 25ml/min. La montée en température se fait de l'ambiante à 900°C à raison de 20°C/min. La détection du signal se fait avec un détecteur de conductivité thermique. La température est mesurée au niveau de l'échantillon à l'aide d'un thermocouple.

La consommation d'hydrogène est calculée à partir de la surface manquante du signal d'hydrogène à la ligne de base à 30°C à la ligne de base à 900°C. Cette consommation d'hydrogène, rapportée à la masse de la phase pérovskite, qui caractérise les propriétés de réductibilité des produits testés est reportée dans le tableau 2

**Tableau 2**

| Exemple | Volume H₂ en ml/g de pérovskite |
|---|---|
| 1 | 47,6 |
| 2 | 49,4 |
| 3 | 53,2 |
| 4 | 44,9 |
| 5 | 65,1 |
| 6 | 51,8 |
| 7 | 62,0 |
| Comparatif 1 | 8,5 |

Il apparaît que la pérovskite supportée des compositions de l'invention présente bien des propriétés réductrices nettement améliorées, la réductibilité pouvant être ainsi 5 fois supérieure dans le cas de l'exemple 1 par rapport à l'exemple comparatif 1 pour des pérovskites de même composition.

## Revendications

1. Composition comprenant une pérovskite de formule LaMO₃ dans laquelle M représente au moins un élément choisi parmi le fer, l'aluminium ou le manganèse, sous forme de particules dispersées sur un support à base d'alumine ou d'oxyhydroxyde d'aluminium, **caractérisée en ce qu'**après calcination à 700°C, 4 heures, la pérovskite se présente sous la forme d'une phase cristallographique pure et **en ce que** les particules de pérovskite ont une taille d'au plus 15 nm.

2. Composition selon la revendication 1, **caractérisée en ce que** les particules présentent une taille d'au plus 10 nm.

3. Composition selon la revendication 1 ou 2, **caractérisée en ce que** la quantité de pérovskite dans la composition est comprise entre 5% et 30%, plus particulièrement entre 10% et 20% en masse.

4. Composition selon l'une des revendications précédentes, **caractérisée en ce qu'**au moins un des éléments La et M de la pérovskite est partiellement substitué par au moins un élément substituant.

5. Composition selon la revendication 4, **caractérisée en ce que** l'élément substituant de La est choisi parmi les terres rares et le calcium et l'élément substituant de M est choisi parmi le cobalt ou le strontium.

6. Composition selon l'une des revendications précédentes, **caractérisée en ce que** la pérovskite présente un déficit en un des éléments La ou M.

7. Composition selon l'une des revendications précédentes, **caractérisée en ce qu'**après calcination à 900°C, 4 heures, les particules de pérovskite présentent une taille d'au plus 18 nm, plus particulièrement d'au plus 15 nm.

8. Composition selon l'une des revendications précédentes, **caractérisée en ce qu'**après calcination à 1000°C 4 heures, les particules de pérovskite présentent une taille d'au plus 22 nm.

9. Composition selon la revendication 7 ou 8, **caractérisée en ce que** la pérovskite se présente sous la forme d'une phase cristallographique pure.

10. Composition selon l'une des revendications précédentes, **caractérisée en ce que** l'alumine ou l'oxyhydroxyde d'aluminium du support est stabilisé et/ou dopé par au moins un élément stabilisant choisi parmi les terres rares, le titane, le zirconium et le silicium.

11. Procédé de préparation d'une composition selon l'une des revendications précédentes, **caractérisé en ce qu'**il comprend les étapes suivantes :
- on forme un milieu liquide comprenant de l'alumine ou de l'oxyhydroxyde d'aluminium et des sels des éléments La et M et, le cas échéant, d'un élément substituant, lesdits sels étant choisis parmi les acétates, les chlorures et les nitrates;
- on ajoute une base au milieu ainsi formé jusqu'à l'obtention d'un pH d'au moins 9 ce par quoi on obtient un précipité;
- on sépare le précipité du milieu réactionnel et, dans le cas de l'utilisation dans la première étape de chlorures ou de nitrates comme sels des éléments précités, on le lave;
- on calcine le précipité.

12. Système catalytique, **caractérisé en ce qu'**il comprend une composition selon l'une des revendications précédentes ou une composition telle qu'obtenue par le procédé selon la revendication 11.

## Patentansprüche

1. Zusammensetzung, umfassend einen Perowskit der Formel LaMO₃, worin M für mindestens ein Element, das aus Eisen, Aluminium oder Mangan ausgewählt ist, steht, in Form von Teilchen, die auf einem Träger auf Basis von Aluminiumoxid oder Aluminiumoxidhydroxid dispergiert sind, **dadurch gekennzeichnet, dass** der Perowskit nach 4 Stunden Calcinierung bei 700°C in Form einer reinen kristallographischen Phase vorliegt und die Perowskit-Teilchen eine Größe von höchstens 15 nm aufweisen.

2. Zusammensetzung nach Anspruch 1, **dadurch gekennzeichnet, dass** die Teilchen eine Größe von höchstens 10 nm aufweisen.

3. Zusammensetzung nach Anspruch 1 oder 2, **dadurch gekennzeichnet, dass** die Perowskitmenge in der Zusammensetzung zwischen 5 und 30 Gew.-% und spezieller zwischen 10 und 20 Gew.-% liegt.

4. Zusammensetzung nach einem der vorhergehenden Ansprüche, **dadurch gekennzeichnet, dass** mindestens eines der Elemente La und M des Perowskits teilweise durch mindestens ein Ersatzelement ersetzt ist.

5. Zusammensetzung nach Anspruch 4, **dadurch gekennzeichnet, dass** das La-Ersatzelement aus Seltenerdmetallen und Calcium ausgewählt ist und das M-Ersatzelement aus Cobalt und Strontium ausgewählt ist.

6. Zusammensetzung nach einem der vorhergehenden Ansprüche, **dadurch gekennzeichnet, dass** der Perowskit ein Defizit an einem der Elemente La oder M aufweist.

7. Zusammensetzung nach einem der vorhergehenden Ansprüche, **dadurch gekennzeichnet, dass** die Perowskit-Teilchen nach 4 Stunden Calcinierung bei 900°C eine Größe von höchstens 18 nm und spezieller höchstens 15 nm aufweisen.

8. Zusammensetzung nach einem der vorhergehenden Ansprüche, **dadurch gekennzeichnet, dass** die Perowskit-Teilchen nach 4 Stunden Calcinierung bei 1000°C eine Größe von höchstens 22 nm aufweisen.

9. Zusammensetzung nach Anspruch 7 oder 8, **dadurch gekennzeichnet, dass** der Perowskit in Form einer reinen kristallographischen Phase vorliegt.

10. Zusammensetzung nach einem der vorhergehenden Ansprüche, **dadurch gekennzeichnet, dass** das Aluminiumoxid bzw. Aluminiumoxidhydroxid des Trägers durch mindestens ein stabilisierendes Element, das aus Seltenerdmetallen, Titan, Zirconium und Silicium ausgewählt ist, stabilisiert und/oder dotiert ist.

11. Verfahren zur Herstellung einer Zusammensetzung nach einem der vorhergehenden Ansprüche, **dadurch gekennzeichnet, dass** es die folgenden Schritte umfasst:
- man bildet ein flüssiges Medium, das Aluminiumoxid oder Aluminiumoxidhydroxid und Salze der Elemente La und M und gegebenenfalls eines Ersatzelements umfasst, wobei die Salze aus Acetaten, Chloriden und Nitraten ausgewählt werden;
- man gibt zu dem so gebildeten Medium eine Base, bis man einen pH-Wert von mindestens 9 erhält, wodurch man einen Niederschlag erhält;
- man trennt den Niederschlag von dem Reaktionsmedium ab und wäscht ihn im Fall der Verwendung von Chloriden oder Nitraten als Salze der oben aufgeführten Elemente im ersten Schritt;
- man calciniert den Niederschlag.

12. Katalysatorsystem, **dadurch gekennzeichnet, dass** es eine Zusammensetzung nach einem der vorhergehenden Ansprüche oder eine gemäß dem Verfahren nach Anspruch 11 erhaltene Zusammensetzung umfasst.

## Claims

1. Composition comprising a perovskite of formula LaMO₃ in which M represents at least one element chosen from iron, aluminum or manganese, in the form of particles dispersed over a support based on alumina or aluminum oxyhydroxide, **characterized in that**, after calcination at 700°C for 4 hours, the perovskite exists in the form of a pure crystallographic phase and **in that** the perovskite particles have a size of at most 15 nm.

2. Composition according to Claim 1, **characterized in that** the particles exhibit a size of at most 10 nm.

3. Composition according to Claim 1 or 2, **characterized in that** the amount of perovskite in the composition is between 5% and 30% by weight, more particularly between 10% and 20% by weight.

4. Composition according to one of the preceding claims, **characterized in that** at least one of the elements La and M of the perovskite is partially substituted by at least one substituent element.

5. Composition according to Claim 4, **characterized in that** the substituent element for La is chosen from rare earth metals and calcium and the substituent element for M is chosen from cobalt or strontium.

6. Composition according to one of the preceding claims, **characterized in that** the perovskite exhibits a deficiency of one of the elements La or M.

7. Composition according to one of the preceding claims, **characterized in that**, after calcination at 900°C for 4 hours, the perovskite particles exhibit a size of at most 18 nm, more particularly of at most 15 nm.

8. Composition according to one of the preceding claims, **characterized in that**, after calcination at 1000°C for 4 hours, the perovskite particles exhibit a size of at most 22 nm.

9. Composition according to Claim 7 or 8, **characterized in that** the perovskite exists in the form of a pure crystallographic phase.

10. Composition according to one of the preceding claims, **characterized in that** the alumina or aluminum oxyhydroxide of the support is stabilized and/or doped with at least one stabilizing element chosen from rare earth metals, titanium, zirconium and silicon.

11. Process for the preparation of a composition according to one of the preceding claims, **characterized in that** it comprises the following stages:
- a liquid medium is formed which comprises alumina or aluminum oxyhydroxide and salts of the elements La and M and, if appropriate, of a substituent element, said salts being chosen from acetates, chlorides and nitrates;
- a base is added to the medium thus formed until a pH of at least 9 is obtained, whereby a precipitate is obtained;
- the precipitate is separated from the reaction medium and, in the case of the use in the first stage of chlorides or nitrates as salts of the abovementioned elements, the precipitate is washed;
- the precipitate is calcined.

12. Catalytic system, **characterized in that** it comprises a composition according to one of the preceding claims or a composition as obtained by the process according to Claim 11.
